# EUROPÄISCHE PATENTSCHRIFT

(11) **EP 0 846 994 B1**
(45) Veröffentlichungstag und Bekanntmachung des Hinweises auf die Patenterteilung: **06.06.2001**
(21) Anmeldenummer: 97119584.7
(22) Anmeldetag: 08.11.1997
(51) Int. Cl.: G05D 7/01

(54) **Stromregelanordnung für eine hydraulische Fördereinrichtung**
Flow control for a hydraulic pumping installation
Dispositif de régulation de débit pour une pompe hydraulique

(30) Priorität: 09.12.1996 DE 19652420
(43) Veröffentlichungstag der Anmeldung: 10.06.1998
(73) Patentinhaber: LuK Fahrzeug-Hydraulik GmbH & Co. KG, 61352 Bad Homburg (DE)
(72) Erfinder: Nguyen, Van Doan, 60437 Frankfurt (DE); Breuer, Peter, 61381 Friedrichsdorf (DE)
(74) Vertreter: Gleiss, Alf-Olav, Dr.jur. Dipl.-Ing.

(56) Entgegenhaltungen:
- EP-A- 0 528 254
- DE-C- 4 426 652
- GB-A- 2 277 306
- US-A- 4 325 677

## Beschreibung

Die Erfindung betrifft eine Stromregelanordnung für eine hydraulische Fördereinrichtung mit den im Oberbegriff des Anspruchs 1 genannten Merkmalen.

Stromregelanordnungen der gattungsgemäßen Art sind bekannt. So ist in der DE 44 26 652 C1 eine Stromregelanordnung beschrieben, die zwei unabhängig voneinander wirkende, parallel zueinander angeordnete Teilförderstromdrosseln aufweist. Ein Gesamtförderstrom wird hierbei durch von den Teilförderstromdrosseln beeinfußten Teilförderströmen gebildet. Durch die unabhängig voneinander wirkenden Teilförderstromdrosseln findet eine Entkopplung der Steuersignale der beiden Teilförderstromdrosseln statt. Mittels der zwei unabhängig voneinander wirkenden und parallel zueinander angeordneten Teilförderstromdrosseln soll erreicht werden, daß eine Förderstromregelung durchgeführt wird, die auch bei hohen Systemdrücken eine Absenkung der Förderstromkennlinie ermöglicht. Bei der bekannten Stromregelanordnung ist nachteilig, daß die Druckdifferenz, mit der die staudruckabhängige Teilförderstromdrossel angesteuert wird, bei bestimmten Betriebssituationen nicht groß genug ist, um eine wirkungsvolle Drosselung zu erreichen, beziehungsweise daß wegen der Pumpenkonstruktion keine ausreichende Druckdifferenz anfällt.

Der Erfindung liegt daher die Aufgabe zugrunde, eine Stromregelanordnung der gattungsgemäßen Art zu schaffen, die einfach aufgebaut ist und bei der diese Nachteile nicht auftreten.

Erfindungsgemäß wird diese Aufgabe mit einer Stromregelanordnung mit den im Anspruch 1 genannten Merkmalen gelöst. Dadurch, daß eine der Teilförderstromdrosseln von einer Druckdifferenz zwischen dem Arbeitsdruck der hydraulischen Fördereinrichtung und einem Druck innerhalb eines Druckraums der hydraulische Fördereinrichtung gesteuert wird, ist es vorteilhaft möglich, die maximal mögliche Druckdifferenz innerhalb der hydraulischen Fördereinrichtung zur Ansteuerung der zweiten Teilförderstromdrossel auszunutzen. Hierdurch wird erreicht, daß mit zunehmender Drehzahl der vorzugsweise als Flügelzellenpumpe ausgebildeten hydraulische Fördereinrichtung die zur Ansteuerung der zweiten Teilförderstromdrossel dienende Druckdifferenz so weit ansteigt, daß diese zur Einstellung einer fallenden Förderstromkennlinie der gesamten hydraulischen Fördereinrichtung ausgenutzt werden kann. Somit ist es gegenüber der aus der DE 44 26 652 C1 bekannten Stromregelanordnung besser möglich, die Gesamtförderstromkennlinie auch bei hohen Drehzahlen, unabhängig von Systemdrücken, auf einen im wesentlichen konstanten oder sogar abfallenden Volumenstrom einzustellen.

In bevorzugter Ausgestaltung der Erfindung ist vorgesehen, daß die Druckdifferenz zwischen dem Arbeitsdruck und einem zur Teilförderstromdrossel am weitesten entferntesten Druckbereich innerhalb des Druckraums der hydraulischen Fördereinrichtung abgegriffen wird. Hierdurch wird sichergestellt, daß auch tatsächlich die maximal höchstmögliche Druckdifferenz zur Ansteuerung der Teilförderstromdrossel ausgenutzt wird.

Ferner ist bevorzugt, wenn der Druck innerhalb des Druckraums an einer Druckniere der hydraulischen Fördereinrichtung in einem optimalen Bereich der Druckniere, bevorzugt am in Drehrichtung eines Rotors der hydraulischen Fördereinrichtung gesehen am Ende der Druckniere abgegriffen wird. Hierdurch wird der Druck dort abgegriffen, wo aufgrund der Verdichtung in dem Druckraum der hydraulischen Fördereinrichtung die höchsten Drücke entstehen.

Weitere vorteilhafte Ausgestaltungen der Erfindung ergeben sich aus den übrigen in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Ansicht einer geöffneten Flügelzellenpumpe;
- Figur 2: eine Detailvergrößerung der Flügelzellenpumpe gemäß Figur 1;
- Figur 3: ein Schaltbild der Stromregelanordnung und
- Figuren 4 bis 7: Förderstromkennlinien der Stromregelanordnung.

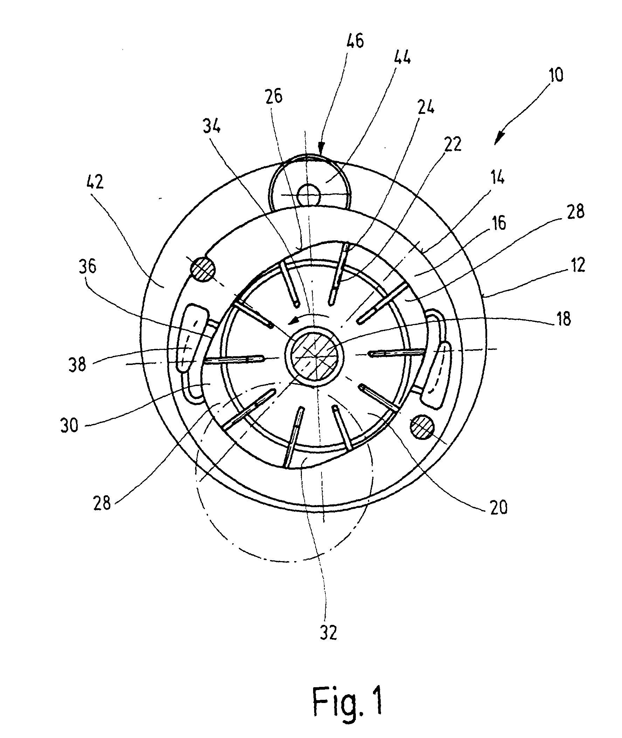

In Figur 1 ist eine Flügelzellenpumpe 10 in einer geöffneten Ansicht gezeigt. Die Flügelzellenpumpe 10 besitzt ein Pumpengehäuse 12, in dem in einer Ausnehmung 14 ein Hubring 16 angeordnet ist. Innerhalb des Hubrings 16 ist auf einer Antriebswelle 18 ein Rotor 20 drehfest angeordnet. Der Rotor 20 ist zentrisch zu der Ausnehmung 14 beziehungsweise dem Hubring 16 angeordnet. Der Rotor 20 weist radial verlaufende Schlitze 22 auf, in denen radial bewegliche Flügel 24 geführt sind. Im gezeigten Beispiel besitzt der Rotor 20 insgesamt zehn Flügel 24, die gleichmäßig über den Umfang des Rotors 20 angeordnet sind.

Der Hubring 16 besitzt eine Innenkontur 26, die zwei diametral gegenüberliegende Pumpenräume 28 ausbildet. Bei der weiteren Beschreibung wird sich lediglich auf einen Pumpenraum 28 bezogen, wobei klar ist, daß beide Pumpenräume 28 identisch aufgebaut sind. Ferner wird nur auf die für die Beschreibung der Erfindung notwendigen Aufbau beziehungsweise Funktion Bezug genommen, da der Aufbau und die Funktion einer Flügelzellenpumpe 10 allgemein bekannt sind.

Der Pumpenraum 28 bildet einen Saugraum 30 und einen Druckraum 32 aus. In der mit einem Pfeil 34 angegebenen Drehrichtung entgegen dem Uhrzeigersinn ist der Druckraum 32 dem Saugraum 30 nachgeordnet. Der Saugraum 30 ist über eine Ansaugöffnung 36 mit einem sogenannten Saugkanal 38 verbunden. Der Saugkanal 38 seinerseits ist über eine nicht näher dargestellte Verbindungsleitung mit einem Sauganschluß der Flügelzellenpumpe 10 verbunden.

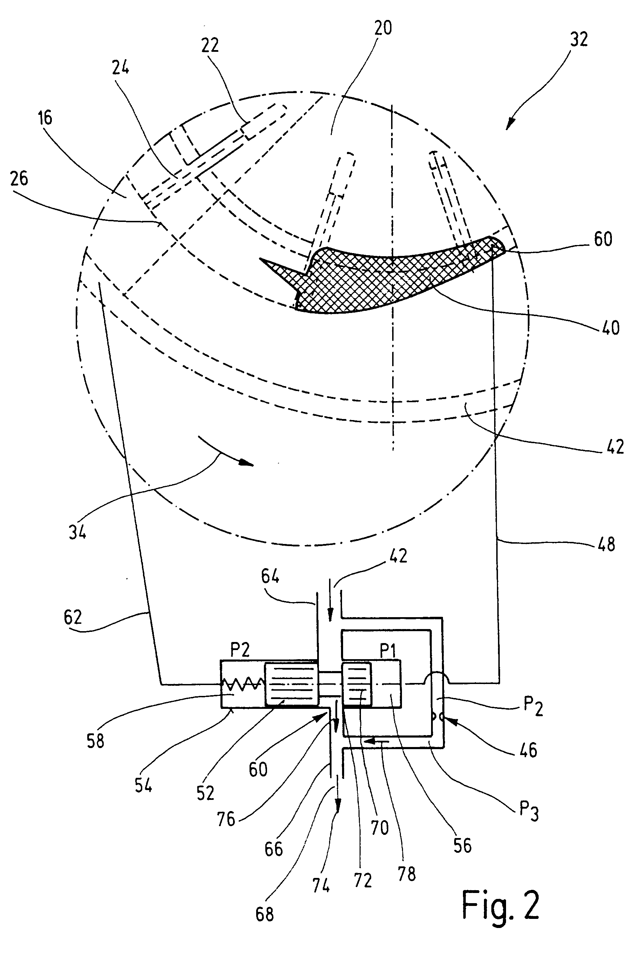

Der Bereich des Druckraums 32 ist in Figur 2 in einer vergrößerten Darstellung gezeigt. Hierbei wird deutlich, daß im Druckbereich 32 eine sogenannte Druckniere 40 angeordnet ist, die eine Auslaßöffnung zu einem mit dem Druckanschluß der Flügelzellenpumpe 10 verbundenen Drucksammelraum 42 bildet. Der Drucksammelraum 42 wird von einem den Hubring 16 umgreifenden Ringraum gebildet. Der Drucksammelraum 42 ist mit allen, im vorliegenden Fall mit den zwei, Drucknieren 40 der Druckräume 32 verbunden. Der Drucksammelraum 42 ist hydraulisch mit einem Förderstromregelventil 44 verbunden.

Das Förderstromregelventil 44 kann beispielsweise eine axiale Verlängerung eines Ventilkolbens aufweisen, die eine Meßblendenbohrung einer feststehenden Meßblende durchgreift. Diese, die Meßblende durchgreifende Verlängerung bildet im Sinne der vorliegenden Erfindung eine erste Teilförderstromdrossel 46. Diese arbeitet wegabhängig. Auf den konkreten Aufbau des Förderstromregelventils 44 soll im Rahmen der vorliegenden Beschreibung nicht näher eingegangen werden, da dieser allgemein bekannt ist.

Die Druckniere 40 ist über eine hier lediglich angedeutete Steuerleitung 48 mit einer zweiten Teilförderstromdrossel 50 verbunden. Die Teilförderstromdrossel 50 ist hier lediglich schematisch angedeutet, um die Grundfunktion zu erläutern. Nach einem konkreten Ausführungsbeispiel kann die Teilförderstromdrossel 50 beispielsweise in das Förderstromregelventil 44 integriert sein. Die Teilförderstromdrossel 50 weist einen Ventilkolben 52 auf, der in einer Ventilbohrung 54 axial gegen die Kraft einer Feder 55 beweglich gelagert ist. Der Ventilkolben 52 ist in seiner axialen Erstreckung kleiner als die axiale Erstreckung der Ventilbohrung 54, so daß dieser, entsprechend der in Figur 2 gezeigten Darstellung einen ersten Druckraum 56 von einem zweiten Druckraum 58 trennt. Der erste Druckraum 56 ist über die Steuerleitung 48 mit der Druckniere 40 verbunden. Die Steuerleitung 48 mündet hierbei in einem -in Drehrichtung 34 gesehen- hinteren Ende 60 der Druckniere 40.

Der zweite Druckraum 58 ist über eine Steuerleitung 62 mit dem Drucksammelraum 42 verbunden. In die Ventilbohrung 54 mündet ein erster Kanal 64, der ebenfalls mit dem Drucksammelraum 42 (in Figur 2 nicht dargestellt) verbunden ist. Gegenüberliegend mündet ein weiterer Kanal 66, der mit dem zu einem Verbraucher führenden Druckanschluß 68 der Flügelzellenpumpe 10 verbunden ist. Der Ventilkolben 52 bildet einen Steuerbund 70 aus, der eine dem Kanal 66 zugeordnete Steuerkante 72 aufweist. Es ist klar, daß der Ventilkolben 52 in der Ventilbohrung 54 dichtend geführt ist, so daß zwischen den Druckräumen 56 beziehungsweise 58 und den Kanälen 64 und 66 keine direkte Verbindung besteht.

In die schematische Zeichnung ist die erste Teilförderstromdrossel 46 mit einbezogen, die einerseits ebenfalls mit dem Drucksammelraum 42 und andererseits mit dem Druckanschluß 68 verbunden ist.

Die Teilförderstromdrosseln 46 und 50 sind somit parallel zueinander angeordnet und wirken unabhängig voneinander. Insgesamt stellen sich hierbei bestimmte Drücke ein, auf die nachfolgend noch näher eingegangen wird. In dem Druckraum 56 herrscht ein Druck P1, der dem im Ende 60 der Druckniere 40 anliegenden Druck entspricht. In dem Druckraum 58 liegt ein Druck P2 an, der dem im Drucksammelraum 42 anliegenden Arbeitsdruck der Flügelzellenpumpe 10 entspricht. Dieser Druck P2 liegt gleichzeitig an einer Seite der Teilförderstromdrossel 46 an. Die andere Seite der Teilförderstromdrossel 46 wird mit einem Druck P3 beaufschlagt, der dem sich an dem hydraulischen Verbraucher, also dem Druckanschluß 68, einstellenden Druck entspricht.

Es wird deutlich, daß die Teilförderstromdrossel 50 von einem im Drucksammelraum 42 anliegenden Arbeitsdruck der Flügelzellenpumpe 10 und einen am Ende 60 der Druckniere 40 anliegenden Druck P1 gesteuert wird. Hierbei ist die Steuerleitung 48 mit nur einer Druckniere 40 der Flügelzellenpumpe 10 verbunden. Idealerweise erfolgt hier die Verbindung mit der Druckniere 40, die räumlich gesehen am weitesten entfernt von dem Förderstromregelventil 44 liegt. Die Teilförderstromdrossel 46 wird von einer Druckdifferenz gesteuert, die sich aus dem im Drucksammelraum 42 anliegenden Arbeitsdruck P2 der Flügelzellenpumpe 10 und dem sich am Verbraucher einstellenden Druck P3 ergibt.

Durch die parallele Anordnung der Teilförderstromdrosseln 46 und 50 ergibt sich ein Gesamtvolumenstrom 74, der sich aus Teilvolumenströmen 76 und 78 zusammensetzt. Die Teilvolumenströme 76 und 78 werden durch die Stellung der Teilförderstromdrosseln 46 und 50 bestimmt. Die Teilförderstromdrossel 50 arbeitet hierbei staudruckabhängig, während die Teilförderstromdrossel 46 beispielsweise wegabhängig arbeitet. Nach weiteren Ausführungsbeispielen kann jedoch auch die Teilförderstromdrossel 46 staudruckabhängig arbeiten oder diese ist als feststehende Teilförderstromdrossel (definierte Drosselstelle) ausgebildet.

Während des Betriebes der Flügelzellenpumpe 10 wird über die Antriebswelle 18 der Rotor 20 in eine Drehbewegung versetzt. Hierbei erfahren die Flügel 24 entsprechend der Innenkontur 26 des Hubrings 16 eine radiale Bewegung. Im Bereich der Saugräume 30 werden die Flügel 24 ausgefahren, so daß sich zwischen zwei benachbarten Flügeln 24 Kammern mit vergrößernden Volumina bilden. Infolge der Vergrößerung dieses Volumens wird über die Ansaugöffnung 36 ein zu förderndes Medium, beispielsweise ein Hydrauliköl, angesaugt. Bei weiter fortschreitender Drehung des Rotors 20 gelangen die Flügel 24 in den Druckraum 32, wo sie radial in die Schlitze 22 eingefahren werden. Hierdurch verringert sich das Volumen zwischen zwei benachbarten Flügeln 24. Infolgedessen wird ein Druck aufgebaut, so daß das geförderte Medium über die Drucknieren 40 abgedrückt wird. Entsprechend der Anzahl der Druckräume 32 der Flügelzellenpumpe 10 ergeben sich hierbei Teilströme, die in dem Drucksammelraum 42 zusammengeführt werden. Dieser im Drucksammelraum 42 anliegende Arbeitsdruck P2 der Flügelzellenpumpe 10 wird zum Ansteuern beider Teilförderstromdrosseln 46 und 50 ausgenutzt. In der Druckniere 40, und hier insbesondere an deren Ende 60, baut sich ein von der Drehzahl des Rotors 20 abhängiger Druck P1 auf, der höher als der Druck P2 im Drucksammelraum 42 ist. Hierdurch stellt sich eine Druckdifferenz zwischen dem Druck P1 und dem Druck P2 ein. Da die Drücke P1 und P2 entgegengesetzt an dem Ventilkolben 52 angreifen, wird dieser entsprechend dieser Druckdifferenz nach links beziehungsweise rechts verlagert. Im Ausgangszustend wird der Ventilkolben 52 durch die Kraft der Feder 55 nach rechts gedrückt. Steigt der Druck am Ende 60 der Druckniere 40 an, wird der Ventilkolben 52 gegen die Kraft der Feder 55 nach links verlagert. Da gleichzeitig der Druck im Drucksammelraum 42 ansteigt, wirkt dem Druck P1 nicht nur die Kraft der Feder 55, sondern auch der Druck P2 entgegen. Durch Einstellung der Kraft der Feder 55 kann somit das Druckverhältnis P1 - P2 bestimmt werden, bei dem der Ventilkolben 52 eine Verbindung zwischen dem Kanal 64 und dem Kanal 66 öffnet, so daß sich ein bestimmter Teilvolumenstrom 76 ergibt. Der zweite Teilvolumenstrom 78 wird in hier nicht näher zu betrachtender Weise über die Teilförderstromdrossel 46 eingestellt.

Mit steigender Drehzahl des Rotors 20 steigt der Druck P1 am Ende 60 der Druckniere 40 weiter an, so daß die Druckdifferenz zwischen den Drücken P1 und P2 größer wird. Hierdurch erfolgt eine weitere Verlagerung des Ventilkolbens 52 nach links, so daß die Steuerkante 72 des Steuerbundes 70 den Kanal 66 axial überfährt, so daß die freie Durchtrittsfläche zwischen dem Innenraum 58 und dem Kanal 66 einerseits und dem Innenraum 58 und dem Kanal 64 andererseits verringert' wird. Hierdurch wird eine Drosselstelle mit variablem Querschnitt ausgebildet, deren freier Querschnitt von der Druckdiffenrenz P1 - P2 abhängig ist.

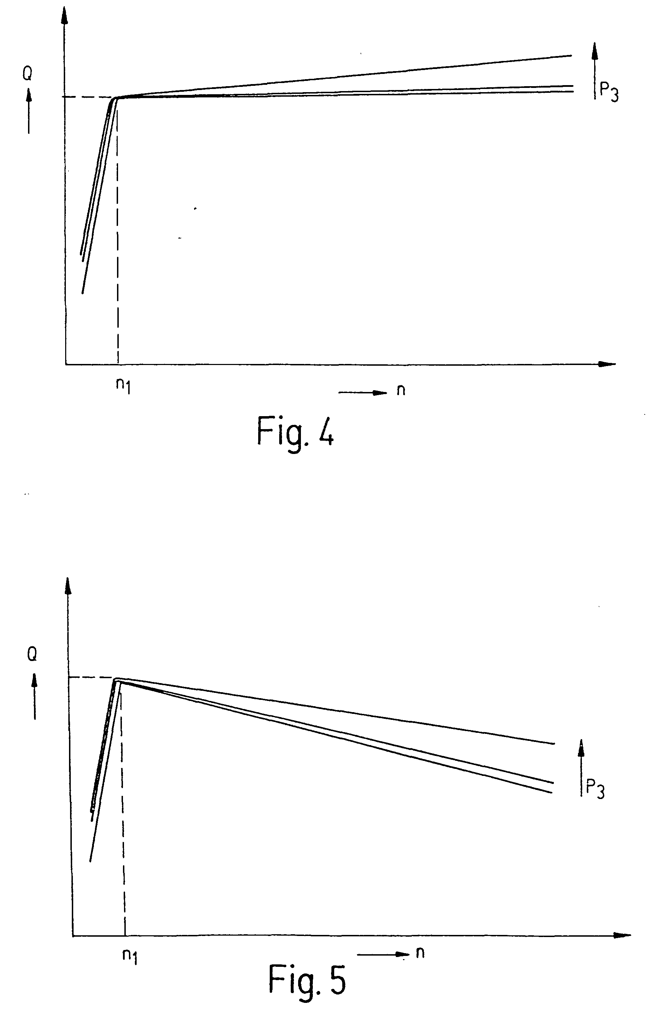

Durch die Überlagerung der Teilvolumenströme 78 und 76, wobei diese entsprechend der Druckdifferenzen P1 - P2 beziehungsweise P2 - P3 variabel sind, stellt sich ein Gesamtvolumenstrom 74 ein. Durch die zwei unabhängig und parallel voneinander wirkenden Teilförderstromdrosseln, wobei insbesondere die Teilförderstromdrossel 50 mit dem höchsten in der Flügelzellenpumpe 10 zur Verfügung stehenden Druck P1 am Ende 60 der dem Förderstromregelventil 44 am weitest entferntesten Druckniere 40 angesteuert wird, lassen sich Gesamtvolumenströme 74 mit einer großen Absenkung im oberen Drehzahlbereich der Flügelzellenpumpe 10 erzielen. Hierzu wird beispielhaft auf die anhand von Figur 4 gezeigten unterschiedlichen Förderstromkennlinien verwiesen.

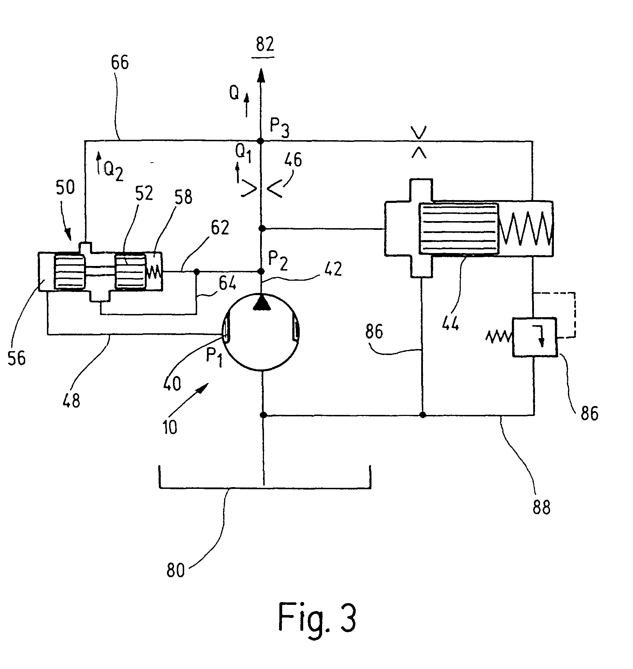

In Figur 3 ist ein Schaltbild der in den Figuren 1 und 2 gezeigten Stromregelanordnung für eine hydraulische Fördereinrichtung, hier eine Flügelzellenpumpe 10, dargestellt. Das Schaltbild soll die Steuerfunktion der Teilförderstromdrosseln 46 und 50 nochmals verdeutlichen. Gleiche Teile wie in Figur 1 und 2 sind trotz der anderen Darstellung mit gleichen Bezugszeichen versehen und nicht nochmals erläutert.

Die Flügelzellenpumpe 10 fördert im Betrieb einen Förderstrom, der abhängig von der Drehzahl der Flügelzellenpumpe 10 ist. Ist die Flügelzellenpumpe 10 beispielsweise eine in Kraftfahrzeugen angeordnete Lenkhilfpumpe, wird diese beispielsweise von der Brennkraftmaschine des Kraftfahrzeuges mit sich ändernden Drehzahlen angetrieben. Hierbei wird ein Hydrauliköl aus einem angedeuteten Tank 80 zu der Lenkung 82 als hydraulischen Verbraucher gepumpt. Hierbei ist in dem Leitungsweg von der Flügelzellenpumpe 10 zu dem Verbraucher 82 die erste Teilförderstromdrossel 46 angeordnet. Von der Druckniere 40 führt die Steuerleitung 48 zu der zweiten Teilförderstromdrossel 50. Der Drucksammelraum 42, in dem der Druck P2 herrscht, ist einerseits über die Leitungen 62 und 64 mit der zweiten Förderstromdrossel 50 (siehe auch Figur 2) verbunden und andererseits über die erste Teilförderstromdrossel 46 mit dem Verbraucher 82 verbunden. Entsprechend der sich einstellenden Druckverhältnisse zwischen den Drücken P1, P2, P3, insbesondere zwischen den Druckdifferenzen zwischen dem Druck P1 und dem Druck P2, und andererseits dem Druck P2 und dem Druck P3, werden die Teilvolumenströme Q1 (78) und Q2 (76) beeinflußt, so daß sich der Gesamtvolumenstrom Q (74) ergibt. Die Teilvolumenströme Q1 und Q2 vereinigen sich somit zu dem Gesamtvolumenstrom Q.

Ferner ist das Förderstromregelventil 44 angedeutet, dessen Ventilkolben 84 in bekannter Weise eine Booster-Verbindung 86 zu der Saugseite der Flügelzellenpumpe 10 beziehungsweise dem Tank 80 bei zu stark ansteigenden Druck P2 freigibt. Ferner ist ein Druckbegrenzungsventil 86 vorgesehen, das bei Überschreiten des Arbeitsdruckes P2 eines einstellbaren Mindestdruckes zusätzlich öffnet und ebenfalls eine Verbindung 88 zu dem Tank 80 freigibt.

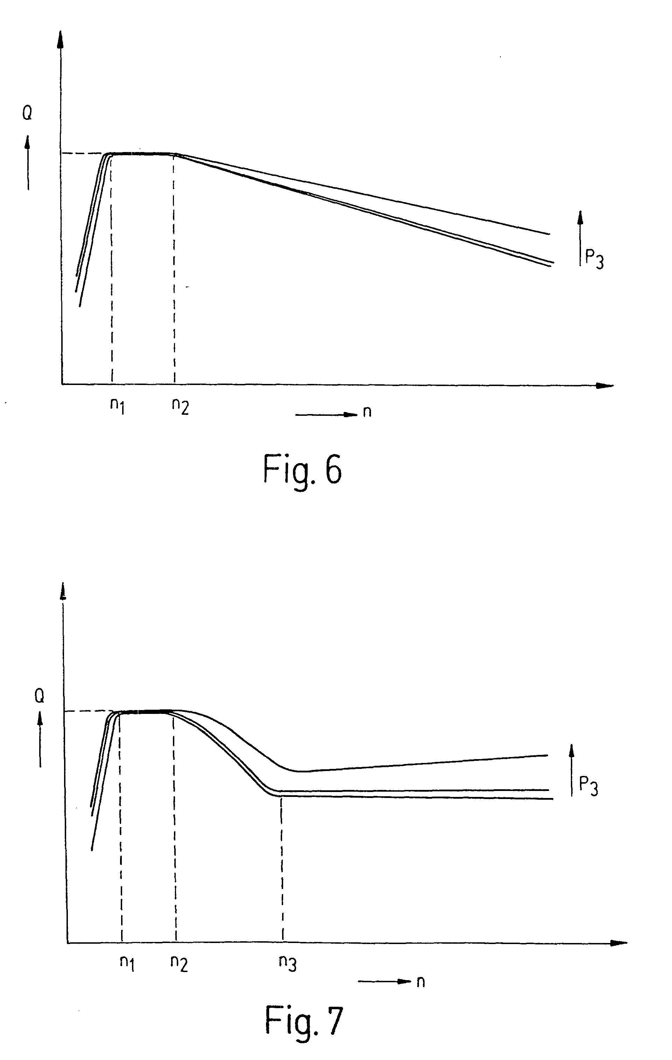

In den Figuren 4 bis 7 sind Förderstromkennlinien dargestellt, die mit der Stromregelanordnung erzielt werden können. Bei den Förderstromkennlinien ist jeweils der Gesamtvolumenstrom Q in l/min über eine Drehzahl n in U/min der Flügelzellenpumpe 10 dargestellt, Es ist jeweils eine Schar von Förderstromkennlinien pro Figur eingetragen, die unterschiedlichen Drücken P entsprechen. Der hier angegebene Druckwert entspricht dem Betriebsdruck P3 der Flügelzellenpumpe 10. Anhand der unterschiedlichen Förderstromkennlinien soll verdeutlicht werden, daß trotz eines sich unterschiedlich einstellenden Druckes die Kennlinien einerseits in einem relativ schmalen Toleranzband verbleiben und diese mit steigender Drehzahl n in einem relativ konstanten Bereich des Volumenstroms Q verbleiben beziehungsweise auf niedere Werte des Volumenstroms Q abgesenkt werden können. Die unterschiedlichen Kennlinienfelder in den Figuren 4 bis 7 ergeben sich aus einer unterschiedlichen Wahl beziehungsweise Einstellung der Teilförderstromdrosseln. Somit ist beispielsweise gemäß Figur 4 ein Ansteigen des Volumenstroms Q auf einen Wert bei einer Drehzahl nl möglich, der dann unabhängig vom Druck P3 relativ konstant beibehalten wird. Gemäß Figur 5 ist nach einem weiteren Ausführungsbeispiel möglich, daß nach Überschreiten der Drehzahl nl der Volumenstrom Q relativ konstant unabhängig vom Druck P3 in einem schmalen Toleranzband abfällt. Ein weiteres in Figur 6 gezeigtes Ausführungsbeispiel zeigt die Möglichkeit, den Volumenstrom Q unabhängig vom Druck P3 in einem begrenzten Drehzahlbereich zwischen den Drehzahlen nl und n2 relativ konstant zu halten, um nachfolgend eine relativ konstante Absenkung in einem schmalen Toleranzbereich zu erhalten. Ferner ist gemäß dem in Figur 7 gezeigten Ausführungsbeispiel möglich, den Volumenstrom Q, wiederum unabhängig vom Druck P3, in einem Bereich der Drehzahlen nl bis n2 relativ konstant einzustellen, um dann den Volumenstrom Q in einem Drehzahlbereich bis zur Drehzahl n3 abzusenken und bei Drehzahlen oberhalb der Drehzahl n3 den Volumenstrom Q in einem relativ schmalen Toleranzband im wesentlichen konstant einzustellen.

## Patentansprüche

1. Stromregelanordnung für eine hydraulische Fördereinrichtung, mit unabhängig voneinander wirkenden, parallel zueinander angeordneten Teilförderstromdrosseln, zur Beeinflussung eines von der hydraulischen Fördereinrichtung bereitgestellten Förderstroms zu einem hydraulischen Verbraucher, **dadurch gekennzeichnet,** daß eine der Teilförderstromdrosseln (50) von einer Druckdifferenz zwischen dem Arbeitsdruck (P2) der hydraulischen Fördereinrichtung (10) und einem Druck (P1) innerhalb eines Druckraums (32) der hydraulischen Fördereinrichtung (10) gesteuert wird.

2. Stromregelanordnung nach Anspruch 1, **dadurch gekennzeichnet,** daß der Druck (P1) an dem Druckraum (32) abgegriffen wird, der räumlich am weitesten entfernt von einem Stromregelventil (44) der hydraulischen Fördereinrichtung (10) angeordnet ist.

3. Stromregelanordnung nach einem der vorhergehenden Ansprüche, dadurch gekennzeichnet, daß der Druck (P1) an einer Druckniere (40) des Druckraumes (32) abgegriffen wird.

4. Stromregelanordnung nach einem der vorhergehenden Ansprüche, **dadurch gekennzeichnet,** daß der Druck (P1) -in Drehrichtung eines Rotors (26) der hydraulischen Fördereinrichtung (10) gesehen- am Ende (60) der Druckniere (40) abgegriffen wird.

5. Stromregelanordnung nach einem der vorhergehenden Ansprüche, **dadurch gekennzeichnet,** daß die Förderstromdrosseln (46, 50) in das Stromregelventil (44) integriert sind.

6. Stromregelanordnung nach einem der vorhergehenden Ansprüche, **dadurch gekennzeichnet,** daß die Teilförderstromdrossel (50) staudruckabhängig arbeitet.

7. Stromregelanordnung nach einem der vorhergehenden Ansprüche, **dadurch gekennzeichnet,** daß die Teilförderstromdrossel (46) wegabhängig arbeitet.

8. Stromregelanordnung nach einem der Ansprüche 1 bis 6, **dadurch gekennzeichnet,** daß die Teilförderstromdrossel (46) staudruckabhängig arbeitet.

9. Stromregelanordnung nach einem der Ansprüche 1 bis 6, **dadurch gekennzeichnet,** daß die Teilförderstromdrossel (46) als feste Drosselstelle ausgebildet ist.

## Claims

1. A flow-regulating arrangement for an hydraulic conveying device, having partial-discharge throttles which act independently of one another and which are arranged parallel to one another, for influencing a discharge - provided by the hydraulic conveying device - to an hydraulic consumer, characterised in that one of the partial-discharge throttles (50) is controlled by a pressure difference between the working pressure (P2) of the hydraulic conveying device (10) and a pressure (P1) within a pressure chamber (32) of the hydraulic conveying device (10).

2. A flow-regulating arrangement according to Claim 1, characterised in that the pressure (P1) is measured at the pressure chamber (32) arranged most spatially remote from a flow-regulating valve (44) of the hydraulic conveying device (10).

3. A flow-regulating arrangement according to any one of the preceding Claims, characterised in that the pressure (P1) is measured at a pressure kidney (40) of the pressure chamber (32).

4. A flow-regulating arrangement according to any one of the preceding Claims, characterised in that the pressure (P1) is measured at the end (60) of the pressure kidney (40), viewed in the direction of rotation of a rotor (26) of the hydraulic conveying device (10)

5. A flow-regulating arrangement according to any one of the preceding Claims, characterised in that the discharge throttles (46, 50) are integrated into the flow-regulating valve (44).

6. A flow-regulating arrangement according to any one of the preceding Claims, characterised in that the partial-discharge throttle (50) operates in dependence on the dynamic pressure.

7. A flow-regulating arrangement according to any one of the preceding Claims, characterised in that the partial-discharge throttle (46) operates in a path-dependent manner.

8. A flow-regulating arrangement according to any one of Claims 1 to 6, characterised in that the partial-discharge throttle (46) operates in dependence on the dynamic pressure.

9. A flow-regulating arrangement according to any one of Claims 1 to 6, characterised in that the partial-discharge throttle (46) is in the form of a fixed throttling site.

## Revendications

1. Dispositif de régulation de débit pour une pompe hydraulique, avec deux étrangleurs de débit partiel agissant indépendamment l'un de l'autre, et placés parallèlement l'un par rapport à l'autre, pour l'influence d'un débit fourni par la pompe hydraulique vers un consommateur hydraulique, **caractérisé en ce que** l'un des étrangleurs de débit partiel (50) est commandé par une différence de pression entre la pression de travail (P2) de la pompe hydraulique (10) et une pression (P1) à l'intérieur d'une chambre de pression (32) de la pompe hydraulique (10).

2. Dispositif de régulation de débit selon la revendication 1, **caractérisé en ce que** la pression (P1) est prélevée sur la chambre de pression (32) placée à la distance la plus éloignée d'une soupape de régulation de débit (44) de la pompe hydraulique (10).

3. Dispositif de régulation de débit selon l'une des revendications précédentes, **caractérisé en ce que** la pression (P1) est prélevée sur un rognon de pression (40) de la chambre de pression (32).

4. Dispositif de régulation de débit selon l'une des revendications précédentes, **caractérisé en ce que** la pression (P1) - vue dans le sens de rotation d'un rotor (26) de la pompe hydraulique (10) - est prélevée sur l'extrémité (60) du rognon de pression (40).

5. Dispositif de régulation de débit selon l'une des revendications précédentes, **caractérisé en ce que** les étrangleurs de débit partiel (46, 50) sont intégrés dans la soupape de régulation du débit (44).

6. Dispositif de régulation de débit selon l'une des revendications précédentes, **caractérisé en ce que** l'étrangleur de débit partiel (50) travaille en fonction de la pression dynamique.

7. Dispositif de régulation de débit selon l'une des revendications précédentes, **caractérisé en ce que** l'étrangleur de débit partiel (46) travaille en fonction de la course ou du trajet.

8. Dispositif de régulation de débit selon l'une des revendications 1 à 6, **caractérisé en ce que** l'étrangleur de débit partiel (46) travaille en fonction de la pression dynamique.

9. Dispositif de régulation de débit selon l'une des revendications 1 à 6, **caractérisé en ce que** l'étrangleur de débit partiel (46) est formé comme emplacement fixe d'étrangleur.
